# EUROPÄISCHE PATENTSCHRIFT

(11) **EP 1 817 951 B1**
(45) Veröffentlichungstag und Bekanntmachung des Hinweises auf die Patenterteilung: **25.02.2009**
(21) Anmeldenummer: 06124913.2
(22) Anmeldetag: 28.11.2006
(51) Int. Cl.: A01B 69/00, A01F 12/38

(54) **Mähdrescher mit Hordenschüttler**
Combine harvester with straw walker
Moissonneuse-batteuse avec secoueur de paille

(30) Priorität: 14.02.2006 DE 102006006938
(43) Veröffentlichungstag der Anmeldung: 15.08.2007
(73) Patentinhaber: CLAAS Selbstfahrende Erntemaschinen GmbH, 33428 Harsewinkel (DE)
(72) Erfinder: Hübner, Ralf, Dr. Ing., 01097 Dresden (DE); Bernhardt, Jörg, cand.Ing., 01728 Hänichen (DE); Bernhardt, Gerd, 01728 Hänichen (DE)

(56) Entgegenhaltungen:
- EP-A- 1 584 225
- EP-A1- 0 451 358
- DE-C- 953 479
- GB-A- 177 359

## Beschreibung

Die Erfindung betrifft einen Mähdrescher mit einem Hordenschüttler mit wenigstens einer sich auf einer Bewegungsbahn bewegenden Schüttlerhorde.

Aus der DE 196 49 020 ist ein Mähdrescher mit einem Hordenschüttler bekannt, der mehrere nebeneinander angeordnete Schüttlerhorden aufweist, die über zwei Kurbelwellen angetrieben werden. Die Kurbelwellen sind als gerade Wellen mit daran befestigten, dem Versatz der Schüttlerhorden entsprechenden Verstellexzentern ausgebildet und treiben die Schüttlerhorde auf einer kreisförmigen Bewegungsbahn an. Durch eine Einstellung der Verstellexzenter mittels einer Zahnstange oder über einen hydraulischen oder pneumatischen Kolben kann die Exzentrizität der Verstellexzenter verändert werden, wodurch unterschiedliche Hübe und damit unterschiedliche Wurfweiten der Schüttlerhorde erzielt werden.

Nachteilig bei diesem bekannten Schüttler ist, dass die Bewegungsbahn der Schüttlerhorde nicht veränderbar ist und damit eine permanente Anpassung der Bewegungsbahn der Schüttlerhorde an sich ändernde Erntebedingungen nicht möglich ist.

Aus der EP 1 584 225 A1 ist ein Mähdrescher mit einem Hordenschüttler bekannt, bei dem die Bewegungsbahn der Schüttlerhorden in Abhängigkeit von Emtegutparametem oder der Neigung des Mähdreschers änderbar ist. Nachteilig an einem derartigen Mähdrescher ist es, dass für die Einstellung der Bewegungsbahn, die Abstützung der Schüttlerhorden sowie für den Antrieb eine Vielzahl an Bauelementen erforderlich ist.

Der Erfindung liegt daher die Aufgabe zugrunde, die Nachteile des Standes der Technik zu vermeiden und einen Hordenschüttler zu entwickeln, der eine erhöhte Abscheideleistung aufweist und dessen Bewegungsbahn beliebig gestaltbar und variierbar ist.

Diese Aufgabe wird erfindungsgemäß durch die kennzeichnenden Merkmale der Ansprüche 1 und 19 gelöst. Weitere vorteilhafte Wirkungen des Erfindungsgegenstandes ergeben sich aus den Unteransprüchen.

Dadurch, dass die Bewegungsbahn der Schüttlerhorde kontinuierlich in Abhängigkeit von wenigstens einem Emtegutparameter änderbar ist, kann die Bewegung der Schüttlerhorde flexibel und schnell an die sich ändernden Abscheidebedingungen angepasst werden, um ein optimales Abscheideergebnis zu erzielen.

Indem die Schüttlerhorde über wenigstens drei längenveränderliche Stellglieder beweglich mit einem Maschinengehäuse verbunden ist, kann die Abstützung der Schüttlerhorde am Maschinengehäuse und der Antrieb der Schüttlerhorde über ein- und dieselben Elemente erfolgen.

Vorteilhafterweise wird die Bewegungsbahn durch die kontinuierliche Längenänderung wenigstens eines Stellgliedes erzeugt, so dass eine Änderung der Bewegungsbahn im laufenden Betrieb möglich ist.

Dadurch, dass zumindest ein erstes Stellglied im frontseitigen Bereich der Schüttlerhorde und zumindest zwei weitere Stellglieder im rückwärtigen Bereich der Schüttlerhorde angelenkt sind oder ein erstes Stellglied im rückwärtigen Bereich der Schüttlerhorde und zumindest zwei weitere Stellglieder im frontseitigen Bereich der Schüttlerhorde angelenkt sind, kann die Schüttlerhorde über die Stellglieder abgestützt und gleichzeitig auf einer Bahn geführt werden, ohne dass eine labile Lagerung der Schüttlerhorde auftritt.

In einer vorteilhaften Ausgestaltung der Erfindung sind wenigstens ein erstes und ein zweites Stellglied im Bereich des Guteintrittsendes der Schüttlerhorde angeordnet, wobei das erste und das zweite Stellglied um den gemeinsamen Gelenkpunkt schwenkbar an der Schüttlerhorde und um voneinander beabstandeten Gelenkpunkte schwenkbar mit dem Maschinengehäuse verbunden sind und dass zumindest ein weiteres Stellglied im Bereich des Gutaustrittsendes der Schüttlerhorde angeordnet ist, wobei das weitere Stellglied in einem Gelenkpunkt schwenkbeweglich mit der Schüttlerhorde und in einem Gelenkpunkt schwenkbeweglich mit dem Maschinengehäuse verbunden ist, so dass die Schüttlerhorde auf einfache Weise von einem Stellglied um veränderbare Kurbelradien verschwenkbar antreibbar ist.

Vorteilhafterweise resultiert die Bewegungsbahn des Hordenschüttlers aus einem Umlauf des der Schüttlerhorde frontseitig zugeordneten Gelenkpunkts auf einer ersten endlosen Kurvenbahn und aus einem Umlauf des der Schüttlerhorde im rückwärtigen Bereich zugeordneten Gelenkpunkts auf einer zweiten endlosen Kurvenbahn, so dass sich eine gewünschte Bewegungsbahn der Schüttlerhorde durch die Änderung der Kurvenbahnen gestalten lässt.

Indem die Längenänderung wenigstens zweier Stellglieder den Umlauf wenigstens eines Gelenkpunktes auf einer endlosen Kurvenbahn bewirken, können je nach dem welche Stellglieder zusammen verstellt werden, können die Gelenkpunkte wahlweise auf gleichen Kurvenbahnen oder auf unterschiedlichen Kurvenbahnen umlaufen.

Indem die erste endlose Kurvenbahn des der Schüttlerhorde frontseitig zugeordneten Gelenkpunkts abhängig von den ungleichen Längenänderungen des ersten und zweiten Stellgliedes ist, können durch frei wählbare Ein- und Ausfahrgeschwindigkeiten der Stellglieder unterschiedliche Bewegungsbahnen des Schüttlerhorde erreicht werden.

In einer vorteilhaften Weiterbildung der Erfindung ergibt sich die zweite endlose Kurvenbahn des der Schüttlerhorde in einem rückwärtigen Bereich zugeordneten Gelenkpunkts aus dem Umlauf des der Schüttlerhorde frontseitig zugeordneten Gelenkpunkts auf der ersten Kurvenbahn und den Längenänderungen des dritten Stellgliedes, so dass die zweite Kurvenbahn mit nur einem weiteren Stellglied herstellbar ist.

Eine besonders vorteilhafte Ausgestaltung der Erfindung ergibt sich, wenn die Längenänderungen wenigstens eines an dem der Schüttlerhorde frontseitig zugeordneten Gelenkpunkt angelenkten Stellgliedes und wenigstens eines an dem der Schüttlerhorde in einem rückwärtigen Bereich zugeordneten Gelenkpunkt angelenkten Stellgliedes synchron sind, da in diesem Fall die Kurvenbahnen und die daraus resultierende Bewegungsbahn des Hordenschüttlers gleich sind.

Dadurch, dass in einer Steuereinheit mehrere von wenigstens einem Erntegutparameter abhängige Bewegungsbahnen für die Schüttlerhorde gespeichert sind, wobei von der Steuereinheit für jede Bewegungsbahn die zugehörigen Längenänderungen für die Stellglieder vorgegeben werden, kann eine zeitnahe, automatische Anpassung der Bewegungsbahn der Schüttlerhorde an die aktuellen Erntebedingungen während des Erntefahrt erfolgen.

Indem die Steuereinheit in Abhängigkeit von wenigstens einem Erntegutparameter eine Bewegungsbahn auswählt und mit den zugehörigen Längenänderungen für die Stellglieder die Bewegungsrichtung und die Ein- und Ausfahrgeschwindigkeit der Stellglieder regelt, erfolgt die Änderung der Bewegungsbahn der Schüttlerhorde vollautomatisch und kontinuierlich ohne Zutun des Bedieners des Mähdreschers.

Vorteilhafterweise sind der oder die Erntegutparameter die Erntegutfeuchte und/oder die Erntegutmenge des über den Hordenschüttler geförderten Erntegutes und/oder der Kornverlusts, da diese Parameter den entscheidenden Einfluss auf die Qualität des Abscheideergebnisses des Hordenschüttlers haben beziehungsweise die Qualität der Abscheidung wiedergeben.

In einer vorteilhaften Ausgestaltung der Erfindung ist die Bewegungsbahn der Schüttlerhorde vorzugsweise eine Kreisbahn oder eine Ellipsenbahn, da bei diesen Bewegungsbahnen die erfahrungsgemäß besten Abscheideergebnisse am Hordenschüttler erzielt werden.

In vorteilhafter Weiterbildung der Erfindung weisen die Ellipsenbahnen unterschiedlich kleine Halbachsen auf, so dass durch die Wahl der Ellipsenbahn die Fördergeschwindigkeit des über die Schüttlerhorde geförderten Erntegutes änderbar ist.

Vorteilhafterweise weisen die Ellipsenbahnen unterschiedliche große Ellipsenneigungswinkel zur Schüttlerhorde auf, so dass durch die Wahl der Ellipsenbahn die Anzahl der von der Schüttlerhorde auf das Erntegut wirkenden Impulse änderbar ist.

Je höher die Erntegutfeuchte oder je größer die Erntegutmenge ist, desto kleiner wird die kleine Halbachse der Ellipsenbahn gewählt, damit die Fördergeschwindigkeit des Erntegutes verringert und damit die Verweilzeit des Erntegutes auf dem Hordenschüttler zur intensiveren Abscheidung verlängert wird.

Je höher die Emtegutfeuchte oder je größer die Erntegutmenge ist, desto größer wird der Ellipsenneigungswinkel der Ellipsenbahn gewählt, damit die Anzahl der von der Schüttlerhorde auf das Erntegut wirkenden Impulse zur intensiveren Abscheidung des Erntegutes erhöht wird.

Dadurch, dass die Bewegungsbahn der Schüttlerhorde kontinuierlich in Abhängigkeit von der Neigung des Mähdreschers änderbar ist, kann die Bewegung der Schüttlerhorde flexibel und schnell an die sich bei der Erntefahrt am Hang ändernden Abscheidebedingungen angepasst werden, um ein optimales Abscheideergebnis zu erzielen.

Die Stellglieder sind vorteilhafterweise als doppelt wirkende Hydraulikzylinder und /oder als Pneumatikzylinder und/oder als elektrische Verstellantriebe ausgeführt, die auf einfache Weise für eine Längenänderung ein- und ausfahrbar sind.

Weitere vorteilhafte Ausgestaltungen sind Gegenstand weiterer Unteransprüche und werden nachfolgend an Hand des in mehreren Figuren dargestellten Ausführungsbeispiels näher erläutert.

Es zeigen:
Fig. 1 eine Seitenansicht eines Mähdreschers mit einer erfindungsgemäßen Schüttlerhorde mit einer als Ellipsenbahn ausgeführten Bewegungsbahn,
Fig. 2 eine Seitenansicht einer Schüttlerhorde gemäß Fig. 1 mit einer als Kreisbahn ausgeführten Bewegungsbahn für die Schüttlerhorde,
Fig. 3 eine Seitenansicht einer Schüttlerhorde gemäß Fig. 1 mit unterschiedlichen Bewegungsbahnen der Schüttlerhorde im vorderen- und rückwärtigen Bereich,
Fig.4 eine Seitenansicht einer Schüttlerhorde gemäß Figur 1 mit einer Hydraulikeinheit und einer Steuereinheit.

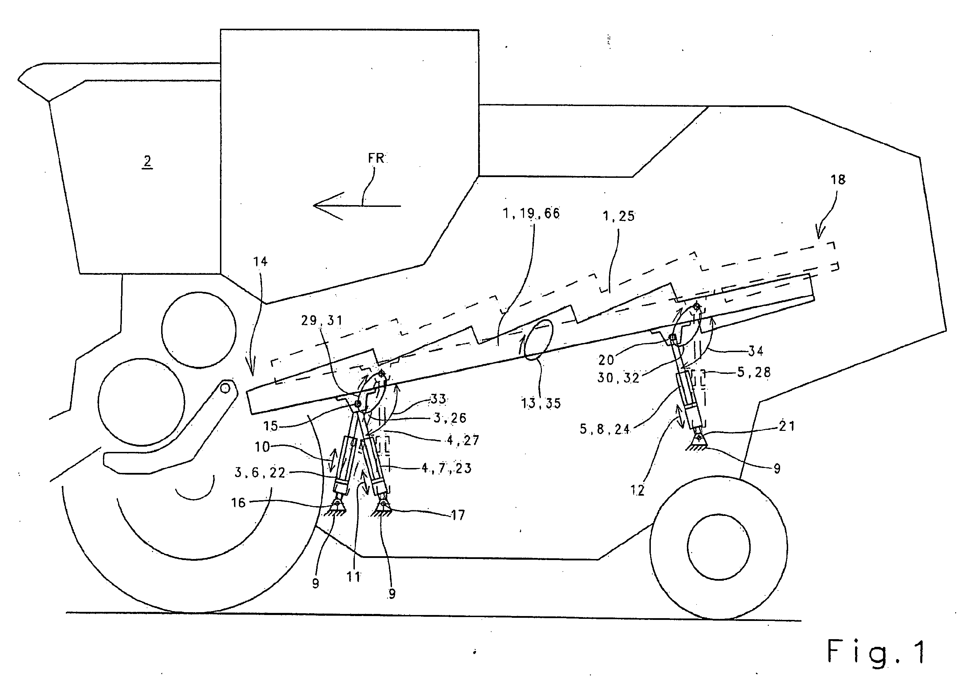

Fig. 1 zeigt die Seitenansicht eines Mähdreschers 2 mit einer Schüttlerhorde 1 eines Hordenschüttlers 66. Die dargestellte Schüttlerhorde 1 ist über als Hubzylinder 3, 4, 5 ausgeführte längenveränderbare Stellglieder 6, 7, 8 beweglich mit dem Maschinengehäuse 9 des Mähdreschers 2 verbunden und wird auf einer durch die Längenänderungen 10, 11, 12 der Stellglieder 6, 7, 8 erzeugten Bewegungsbahn 13 bewegt, um das ausgedroschene Erntegut über den Hordenschüttler 66 zu fördern und dabei Körner und Kurzstroh und Spreu abzuscheiden. Der an sich bekannte Hordenschüttler 66 besteht aus mehreren quer zur Fahrtrichtung FR des Mähdreschers 2 nebeneinander angeordneten Schüttlerhorden 1, die alle wie die beispielhaft dargestellte Schüttlerhorde 1 einzeln über Stellglieder 6, 7, 8 an dem Maschinengehäuse 9 angelenkt sind. Es liegt im Rahmen der Erfindung, die Stellglieder 6, 7, 8 als Pneumatikzylinder oder als elektrische Verstellantriebe auszuführen.

Im dargestellten Ausführungsbeispiel sind zwei Hubzylinder 3, 4 im Bereich des Guteintrittsendes 14 der Schüttlerhorde 1 angeordnet, wobei die Hubzylinder 3, 4 kolbenstangenseitig um einen gemeinsamen Gelenkpunkt 15 schwenkbeweglich mit der Schüttlerhorde 1 und kolbenseitig getrennt um zwei voneinander beabstandete Gelenkpunkte 16, 17 schwenkbeweglich mit dem Maschinengehäuse 9 des Mähdreschers 2 verbunden sind. Im Bereich des Gutaustrittsendes 18 der Schüttlerhorde 1 ist ein weiterer Hubzylinder 5 angeordnet, der kolbenstangenseitig um einen Gelenkpunkt 20 schwenkbeweglich mit der Schüttlerhorde 1 und kolbenseitig um einen Gelenkpunkt 21 schwenkbeweglich mit dem Maschinengehäuse 9 des Mähdreschers 2 verbunden ist. Es liegt im Rahmen der Erfindung im Unterschied zum Ausführungsbeispiel zwei Stellglieder im Gelenkpunkt 20 und ein Stellglied im Gelenkpunkt 15 zwischen der Schüttlerhorde 1 und dem Maschinengehäuse 9 vorzusehen beziehungsweise die Anzahl der zwischen dem Maschinengehäuse 9 und der Schüttlerhorde 1 angelenkten Stellglieder 6, 7, 8 beliebig zu erweitern. Ebenso liegt es im Rahmen der Erfindung, die Hubzylinder 3, 4, 5 jeweils einzeln in voneinander beabstandeten Gelenkpunkten an der Schüttlerhorde 1 zu lagern.
Die Schüttlerhorde 1 sowie die baugleich ausgeführten Hubzylinder 3, 4, 5 sind jeweils in ersten Positionen 19, 22, 23, 24 und zweiten Positionen 25, 26, 27, 28 (gestrichelt) dargestellt, wobei die Kolbenstangen der Hubzylinder 3, 4, 5 in der zugehörigen zweiten Position, 26, 27, 28 weiter ausgefahren sind als in der ersten Position 22, 23, 24. Die Bewegungsbahn 13 der Schüttlerhorde 1 resultiert aus einem Umlauf des Gelenkpunkts 15 auf einer ersten endlosen Kurvenbahn 29 und aus einem Umlauf des Gelenkpunkts 20 auf einer zweiten endlosen Kurvenbahn 30. Die endlose erste Kurvenbahn 29 des Gelenkpunkts 15 ergibt sich dabei durch die unterschiedlichen Längenänderungen 10, 11 der ein- und ausfahrenden Hubzylinder 3 und 4, wobei die Längenänderung 11 des Hubzylinders 4 der Längenänderung 10 des Hubzylinders 3 voreilt, so dass der Gelenkpunkt 15 im Uhrzeigersinn auf der Kurvenbahn 29 umläuft. Die zweite endlose Kurvenbahn 30 des Gelenkpunkts 20 ergibt sich ihrerseits aus dem Umlauf des Gelenkpunkts 15 auf der ersten endlosen Kurvenbahn 29 und den Längenänderungen 12 des Hubzylinders 5. Die Kurvenbahnen 29, 30 sind im dargestellten Ausführungsbeispiel als Ellipsenbahnen 31, 32 ausgeführt, sie können jedoch jede beliebige Form annehmen, wobei die Form der Kurvenbahnen 29, 30 durch die Längenänderungen 10, 11, 12 der Hubzylinder 3, 4, 5 gesteuert wird.
Damit die Kurvenbahn 30 des Gelenkpunkts 20 und die Kurvenbahn 29 des Gelenkpunkts 15 wie im dargestellten Ausführungsbeispiel gleich sind, müssen die Längenänderungen 11, 12 der beiden Hubzylinder 4 und 5 synchron sein und der Winkel 33 zwischen dem Hubzylinder 4 und der Schüttlerhorde 1 und der Winkel 34 zwischen dem Hubzylinder 5 und der Schüttlerhorde 1 müssen bei gleicher Länge der Hubzylinder 4 und 5 gleichgroß sein, daraus resultiert, dass auch die Bewegungsbahn 13 der Schüttlerhorde 1 mit den Kurvenbahnen 29, 30 der Gelenkpunkte 15 und 20 gleich ist und damit im dargestellten Ausführungsbeispiel auch die Bewegungsbahn 13 der Schüttlerhorde 1 eine Ellipsenbahn 35 ist.

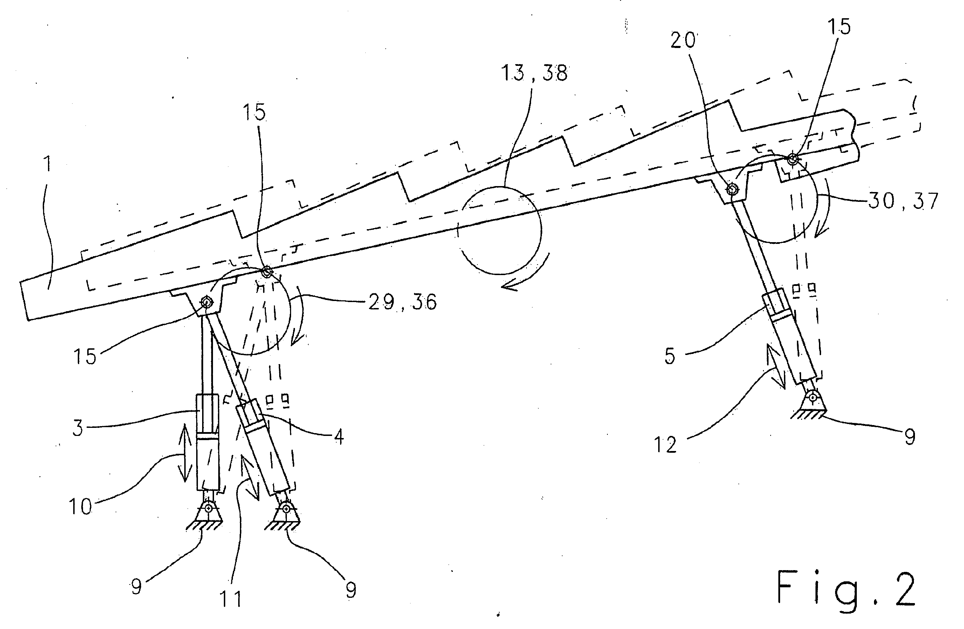

Fig. 2 zeigt eine Schüttlerhorde 1 gemäß Fig.1. Die Längenänderungen 10, 11, 12 der Hubzylinder 3, 4, 5 sind derart gesteuert, dass sich sowohl für die Kurvenbahn 29 des Gelenkpunkts 15 als auch für die Kurvenbahn 30 des Gelenkpunkts 20 gleiche Kreisbahnen 36, 37 ergeben, wobei daraus eine ebenfalls gleichgroße Kreisbahn 38 als Bewegungsbahn 13 für die Schüttlerhorde 1 resultiert.

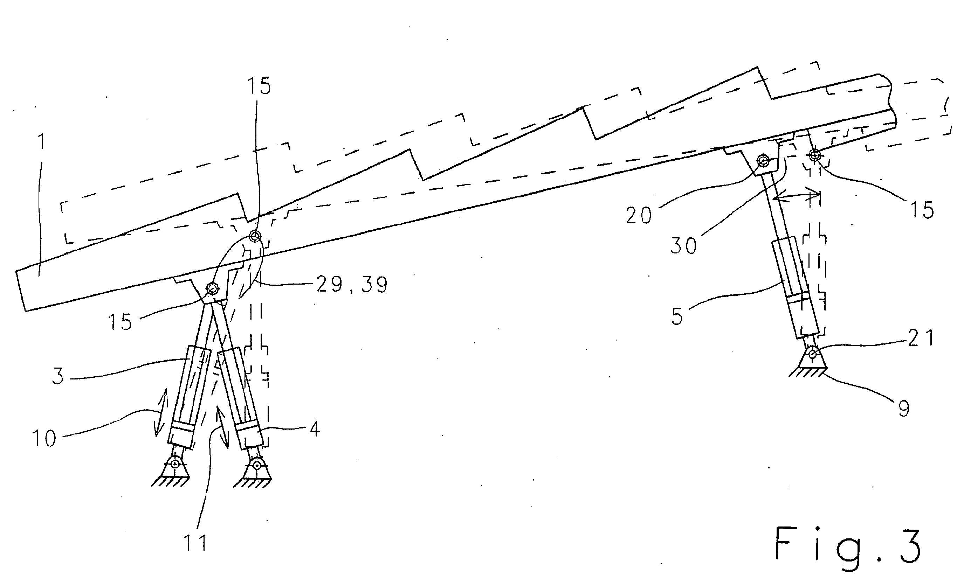

Fig. 3 zeigt ebenfalls eine Schüttlerhorde 1 gemäß Figur. 1. Im Unterschied zu den in den Fig.1 und Fig.2 dargestellten Ausführungsbeispielen weisen die beiden Kurvenbahnen 29, 30 der Gelenkpunkte 15, 20 unterschiedliche Formen auf. Die endlose erste, als Ellipsenbahn 39 ausgeführte Kurvenbahn 29 des Gelenkpunkts 15 ergibt sich durch die unterschiedlichen Längenänderungen 10, 11 der Hubzylinder 3 und 4, wobei die Längenänderung 11 des Hubzylinders 4 der Längenänderung 10 des Hubzylinders 3 voreilt,so dass der Gelenkpunkt 15 im Uhrzeigersinn auf der Ellipsenbahn 39 umläuft. Die zweite kreissegmentförmige Kurvenbahn 30 resultiert aus der durch den Umlauf des Gelenkpunkts 15 verursachten Schwenkbewegung des Hubzylinders 5 um den Gelenkpunkt 21 am Maschinengehäuse 9, dessen Länge konstant bleibt. Die Schüttlerhorde 1 weist somit im vorderen und im hinteren Bereich unterschiedliche den Kurvenbahnen 29, 30 entsprechende Bewegungsbahnen auf.

Damit wird die Möglichkeit geschaffen, dass die jeweilige Schüttlerhorde 1 das Erntegut über ihre Länge unterschiedlich stark erregt. Dies hat insbesondere den Vorteil dass das Erntegut in Abhängigkeit von der noch in der Gutschicht vorhandenen Restkornmenge stärker oder weniger stark erregt werden kann. Abnehmende Erregungen reduzieren zugleich die an der Lagerung der Schüttlerhorde 1 aufzunehmenden Belastungen.

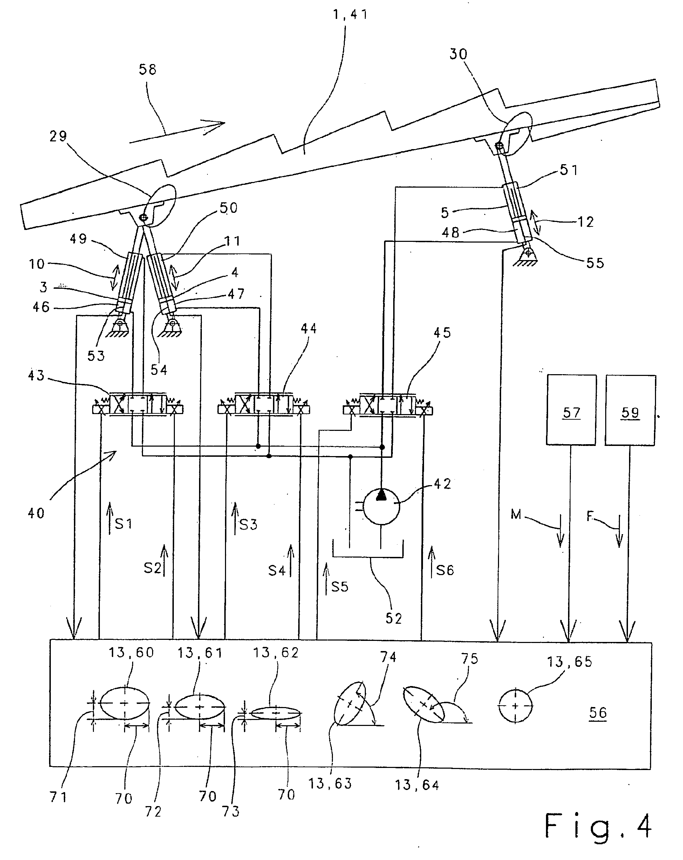

In Fig. 4 ist eine Schüttlerhorde 1 gemäß Fig. 1 mit einer Hydraulikeinheit 40 und einer Steuereinheit 56 dargestellt. Die Hubzylinder 3, 4, 5 sind teilweise ausgefahren und die Schüttlerhorde 1 befindet sich in einer angehobenen Position 41.
Die Hubzylinder 3, 4, 5 sind als doppelt wirkende Hydraulikzylinder ausgeführt, die über eine gemeinsame Hydraulikpumpe 42 druckbeaufschlagt werden. Zwischen jedem Hydraulikzylinder 3, 4, 5 und der Hydraulikpumpe 42 ist jeweils ein Proportionalventil 43, 44, 45 angeordnet, das entweder den Kolbendruckraum 46, 47, 48 des Hubzylinders 3, 4, 5 mit der Hydraulikpumpe 42 und den Kolbenstangendruckraum 49, 50, 51 des Hubzylinders 3, 4, 5 mit einem Tank 52 oder umgekehrt den Kolbenstangendruckraum 49, 50, 51 des Hubzylinders 3, 4, 5 mit der Hydraulikpumpe 42 und den Kolbendruckraum 46, 47, 48 des Hubzylinder 3, 4, 5 mit dem Tank 52 verbindet. Die Proportionalventile 43, 44, 45 regeln die Bewegungsrichtung der Kolbenstangen der Hubzylinder 3, 4, 5 und gleichzeitig über die Drosselung des in die Kolbenstangendruckräume 49, 50, 51 beziehungsweise in die Kolbendruckräume 46, 47, 48 der Hubzylinder 3, 4, 5 hineinströmenden Volumenströme die Geschwindigkeit der Kolbenstangen der Hubzylinder 3, 4,5.
Um die Abscheideleistung des Hordenschüttlers zu erhöhen, ist erfindungsgemäß die Bewegungsbahn 13 der Schüttlerhorde 1 in Abhängigkeit von wenigstens einem Emtegutparameter wie beispielsweise der Erntegutfeuchte und/oder der Erntegutmenge und/oder dem Körnerverlust änderbar.
Hierzu ist die Steuereinheit 56 mit einem an sich bekannten Feuchtesensor 57 zur Erfassung der Erntegutfeuchte verbunden, der beispielsweise die Feuchte des Ernteguts ermittelt. Ebenso kann die Steuereinheit 56 mit einem an sich bekannten Durchsatzsensor 59 verbunden sein, der die vom Mähdrescher 2 vom Feld aufgenommene Erntegutmenge ermittelt. Die Sensoren 57, 59 ermitteln abhängig von der Erntegutfeuchte ein Feuchtesignal F und abhängig von der Erntegutmenge ein Mengensignal M, das an die Steuereinheit 56 übermittelt wird. Ebenso ist möglich, dass der Erntegutparameter der Abscheideverlust am Hordenschüttler ist, der am Ende des Hordenschüttlers mit einem an sich bekannten Körperschallsensor ermittelt wird.

Weiterhin weist jeder Hydraulikzylinder 3, 4, 5 einen Wegsensor 53, 54, 55 auf, der die aktuelle Positionen der Kolbenstange des zugehörigen Hydraulikzylinders 3, 4, 5 sensiert und an die Steuereinheit 56 übermittelt.
In der Steuereinheit 56 sind abhängig von der Erntegutfeuchte und/oder der Erntegutmenge unterschiedliche, beispielsweise als Ellipsenbahnen 60-64 oder als Kreisbahnen 65 ausgeführte Bewegungsbahnen 13 mit den dazugehörigen Längenänderungen 10, 11, 12 für die Hubzylinder 3, 4, 5 gespeichert. Die Steuereinheit 56 wählt in Abhängigkeit von dem Feuchtesignal F und/oder dem Mengensignal M eine Bewegungsbahn 60-65 aus und generiert abhängig von den zugehörigen Längenänderungen 10, 11, 12 Stellsignate S1, S2, S3, S4, S5, S6, die an die Wegeventile 43, 44, 45 übermittelt werden, welche die Bewegungsrichtung und die Ein- und Ausfahrgeschwindigkeit der Hubzylinder 3, 4, 5 regelt.
Sobald sich das Feuchtesignal F und/oder das Mengensignal M ändert, wählt die Steuereinheit 56 eine zu den aktuellen Erntegutparametern zugehörige Bewegungsbahn 60-65 aus.
Die in der Steuereinheit 56 gespeicherten Ellipsenbahnen 60-64 weisen eine große Halbachse 70 und eine kleine Halbachse 71, 72, 73 auf, wobei die Ellipsenbahnen 60, 61, 62 sich durch unterschiedliche kleine Halbachsen 71, 72, 73 voneinander unterscheiden.
Je höher der Feuchtegehalt des Erntegutes oder je größer die Erntegutmenge ist, desto kleiner wird die kleine Halbachse 71, 72, 73 gewählt, um die Fördergeschwindigkeit des Erntegutes 58 auf dem Hordenschüttler in einem optimalen Bereich zu halten und somit die Verweilzeit des Erntegutes auf dem Hordenschüttler zur Erhöhung der Abscheideleistung zu verlängern.
Die Ellipsenbahnen 63 und 64 unterscheiden sich durch ihre unterschiedlichen Ellipsenneigungswinkel 74, 75 zur Schüttlerhorde 1.

Je höher der Feuchtegehalt des Erntegutes oder je größer die Erntegutmenge ist, desto größer wird der Ellipsenneigungswinkel 74, 75 zur Schüttlerhorde 1 gewählt, um die auf das Erntegut wirkenden Impulse zu erhöhen und damit den Abscheidegrad des Hordenschüttlers zu erhöhen.

Es ist ebenso vorstellbar, die Bewegungsbahn der Schüttlerhorde 1 in Abhängigkeit von weiteren Parametern, wie beispielweise der Erntegutart oder dem Hangneigungswinkel bei der Bergauf- bzw. Bergabfahrt des Mähdreschers 2 am Hang einzustellen, um die Fördergeschwindigkeit des Hordenschüttlers 66 unabhängig von der Lage des Mähdreschers 2 konstant zu halten. Die Neigung des Mähdreschers 2 wird hierzu mit einem bekannten Neigungssensor gemessen, der mit der Steuereinheit 56 verbunden ist. Die Bewegungsbahn 13 der Schüttlerhorde 1 kann beispielsweise derart gewählt werden, dass bei Bergauffahrt des Mähdreschers 2 die Bewegung des Erntegutes verzögert und bei Bergabfahrt die Fördergeschwindigkeit des Erntegutes auf dem Hordenschüttler 66 vergrößert wird, um der durch die Schwerkraft bedingte Beschleunigung des Erntegutes entgegenzuwirken. Ebenso ist vorstellbar bei der Erntefahrt des Mähdreschers 2 am Seitenhang die Bewegungsbahn 13 der einzelnen nebeneinander angeordneten Schüttlerhorden 1 getrennt zu regeln, um die Bewegungsbahnen 13 der talseitig angeordneten Schüttlerhorden 1 und der bergseitig angeordneten Schüttlerhorde 1 beispielsweise an die unsymetrische Verteilung des Erntegutes auf dem Hordenschüttler 66 anzupassen.

Es liegt im Rahmen der Erfindung, dass sich die durch die Längenänderungen 10, 11, 12 der Stellglieder 6, 7, 8 ergebenden Kurvenbahnen 29, 30 der Gelenkpunkte 15, 20 jede beliebige Form annehmen können.

Weiter liegt es im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Schüttlerhorde
- 2: Mähdrescher
- 3: Hubzylinder
- 4: Hubzylinder
- 5: Hubzylinder
- 6: erstes Stellglied
- 7: zweites Stellglied
- 8: weiteres Stellglied
- 9: Maschinengehäuse
- 10: Längenänderung
- 11: Längenänderung
- 12: Längenänderung
- 13: Bewegungsbahn
- 14: Guteintrittsende
- 15: Gelenkpunkt
- 16: Gelenkpunkt
- 17: Gelenkpunkt
- 18: Gutaustrittsende
- 19: erste Position
- 20: Gelenkpunkt
- 21: Gelenkpunkt
- 22: erste Position
- 23: erste Position
- 24: erste Position
- 25: zweite Position
- 26: zweite Position
- 27: zweite Position
- 28: zweite Position
- 29: erste Kurvenbahn
- 30: zweite Kurvenbahn
- 31: Ellipsenbahn
- 32: Ellipsenbahn
- 33: Winkel
- 34: Winkel
- 35: Ellipsenbahn
- 36: Kreisbahn
- 37: Kreisbahn
- 38: Kreisbahn
- 39: Ellipsenbahn
- 40: Hydraulikeinheit
- 41: angehobene Position
- 42: Hydraulikpumpe
- 43: Wegeventil
- 44: Wegeventil
- 45: Wegeventil
- 46: Kolbendruckraum
- 47: Kolbendruckraum
- 48: Kolbendruckraum
- 49: Kolbenstangendruckraum
- 50: Kolbenstangendruckraum
- 51: Kolbenstangendruckraum
- 52: Tank
- 53: Sensor
- 54: Sensor
- 55: Sensor
- 56: Steuereinheit
- 57: Feuchtesensor
- 58: Erntegut
- 59: Durchsatzsensor
- 60: Ellipsenbahn
- 61: Ellipsenbahn
- 62: Ellipsenbahn
- 63: Ellipsenbahn
- 64: Ellipsenbahn
- 65: Kreisbahn
- 66: Hordenschüttler
- 70: große Halbachse
- 71: kleine Halbachse
- 72: keine Halbachse
- 73: kleine Halbachse
- 74: Ellipsenneigungswinkel
- 75: Ellipsenneigungswinkel
- M: Mengensignal
- F: Feuchtesignal
- S1: Stellsignal
- S2: Stellsignal
- S3: Stellsignal
- S4: Stellsignal
- S5: Stellsignal
- S6: Stellsignal
- FR: Fahrtrichtung

## Patentansprüche

1. Mähdrescher (2) mit einem Hordenschüttler (66) wobei der Hordenschüttler (66) ein oder mehrere zueinander benachbarte Schüttlerhorden (1) umfasst und jede Schüttlerhorde (1) auf einer Bewegungsbahn (13) bewegbar ist, wobei die Bewegungsbahn (13, 60-65) der Schüttlerhorde (1) kontinuierlich in Abhängigkeit von wenigstens einem Emtegutparameter änderbar ist,
**dadurch gekennzeichnet,**
**dass** die Schüttlerhorde (1) über wenigstens drei längenveränderliche Stellglieder (6, 7, 8) beweglich mit einem Maschinengehäuse (9) verbunden ist.

2. Mähdrescher (2) mit einem Hordenschüttler (66) nach Anspruch 1,
**dadurch gekennzeichnet,**
**dass** die Bewegungsbahn (13, 60-65) der Schüttlerhorde (1) durch die Längenänderung (10, 11, 12) wenigstens eines Stellgliedes (6, 7, 8) erzeugt wird.

3. Mähdrescher (2) mit einem Hordenschüttler (66) nach wenigstens einem der vorhergehenden Ansprüche,
**dadurch gekennzeichnet,**
**dass** zumindest ein erstes Stellglied (6) im frontseitigen Bereich der Schüttlerhorde (1) und zumindest zwei weitere Stellglieder (7, 8) im rückwärtigen Bereich der Schüttlerhorde (1) angelenkt sind oder
ein erstes Stellglied (8) im rückwärtigen Bereich der Schüttlerhorde (1) und zumindest zwei weitere Stellglieder (6, 7) im frontseitigen Bereich der Schüttlerhorde (1) angelenkt sind.

4. Mähdrescher (2) mit einem Hordenschüttler (66) nach wenigstens einem der vorhergehenden Ansprüche,
**dadurch gekennzeichnet,**
**dass** wenigstens ein erstes und ein zweites Stellglied (3, 4, 6, 7) im Bereich des Guteintrütsendes (14) der Schüttlerhorde (1) angeordnet sind, wobei das erste und das zweite Stellglied (3, 4, 6, 7) um den gemeinsamen Gelenkpunkt (15) schwenkbar an der Schüttlerhorde (1) und um die voneinander beabstandeten Gelenkpunkte (16, 17) schwenkbar mit dem Maschinengehäuse (9) verbunden sind und dass zumindest ein weiteres Stellglied (5, 8) im Bereich des Gutaustrittsendes (18) der Schüttlerhorde (1) angeordnet ist, wobei das weitere Stellglied (5, 8) in einem weiteren Gelenkpunkt (20) schwenkbeweglich mit der Schüttlerhorde (1) und in einem Gelenkpunkt (21) schwenkbeweglich mit dem Maschinengehäuse (9) verbunden ist.

5. Mähdrescher (2) mit einem Hordenschüttler (66) nach wenigstens einem der vorhergehenden Ansprüche,
**dadurch gekennzeichnet,**
**dass** die Bewegungsbahn (13, 60-65) der Schüttlerhorde (1) aus einem Umlauf des der Schüttlerhorde (1) frontseitig zugeordneten Gelenkpunkts (15) auf einer ersten endlosen Kurvenbahn (29) und aus einem Umlauf des der Schüttlerhorde (1) in einem rückwärtigen Bereich zugeordneten Gelenkpunkts (20) auf einer zweiten endlosen Kurvenbahn (30) resultiert.

6. Mähdrescher (2) mit einem Hordenschüttler (66) nach wenigstens einem der vorhergehenden Ansprüche,
**dadurch gekennzeichnet,**
**dass** die Längenänderungen (10, 11, 12) wenigstens zweier Stellglieder (6, 7, 8) den Umlauf wenigstens eines Gelenkpunktes (15, 20) auf der endlosen Kurvenbahn (29, 30) bewirken.

7. Mähdrescher (2) mit einem Hordenschüttler (66) nach wenigstens einem der vorhergehenden Ansprüche,
**dadurch gekennzeichnet,**
**dass** die erste endlose Kurvenbahn (29) des der Schüttlerhorde (1) frontseitig zugeordneten Gelenkpunkts (15) sich durch die ungleichen Längenänderungen (10, 11) des ersten und zweiten Stellgliedes (6, 7) ergibt.

8. Mähdrescher (2) mit einem Hordenschüttler (66) nach wenigstens einem der vorhergehenden Ansprüche,
**dadurch gekennzeichnet,**
**dass** die zweite endlose Kurvenbahn (30) des der Schüttlerhorde (1) in einem rückwärtigen Bereich zugeordneten Gelenkpunkts (20) sich aus dem Umlauf des der Schüttlerhorde (1) frontseitig zugeordneten Gelenkpunkts (15) auf der ersten Kurvenbahn (29) und den Längenänderungen (12) des weiteren Stellgliedes (5, 8) ergibt.

9. Mähdrescher (2) mit einem Hordenschüttler (66) nach wenigstens einem der vorhergehenden Ansprüche,
**dadurch gekennzeichnet,**
**dass** die Längenänderungen (11, 12) wenigstens eines an dem der Schüttlerhorde (1) frontseitig zugeordneten Gelenkpunkt (15) angelenkten Stellgliedes (4, 7) und wenigstens eines an dem der Schüttlerhorde (1) in einem rückwärtigen Bereich zugeordneten Gelenkpunkt (20) angelenkten Stellgliedes (5, 8) synchron sind.

10. Mähdrescher (2) mit einem Hordenschüttler (66) nach wenigstens einem der vorhergehenden Ansprüche,
**dadurch gekennzeichnet,**
**dass** in einer Steuereinheit (56) mehrere von wenigstens einem Emtegutparameter abhängige Bewegungsbahnen (13. 60-65) für die Schüttlerhorde (1) gespeichert sind, wobei von der Steuereinheit (56) für jede Bewegungsbahn (13, 60-65) der Schüttlerhorde (1) die zugehörigen Längenänderungen (10, 11, 12) für die Stellglieder (6, 7, 8) vorgegeben werden.

11. Mähdrescher (2) mit einem Hordenschüttler (66) nach wenigstens einem der vorhergehenden Ansprüche,
**dadurch gekennzeichnet,**
**dass** die Steuereinheit (56) in Abhängigkeit von wenigstens einem Emtegutparameter eine Bewegungsbahn (13, 60-65) auswählt und mit den zugehörigen Längenänderungen (10, 11, 12) für die Stellglieder (3, 4, 5, 6, 7, 8) die Bewegungsrichtung und die Ein- und Ausfahrgeschwindigkeit der Stellglieder (6, 7, 8) regelt.

12. Mähdrescher (2) mit einem Hordenschüttler (66) nach wenigstens einem der vorhergehenden Ansprüche,
**dadurch gekennzeichnet,**
**dass** der oder die Emtegutparameter die Erntegutfeuchte und/oder die Erntegutmenge des Erntegutes und/oder der Kornverlust sind.

13. Mähdrescher (2) mit einem Hordenschüttler (66) nach wenigstens einem der vorhergehenden Ansprüche,
**dadurch gekennzeichnet,**
**dass** die in der Steuereinheit (56) gespeicherte Bewegungsbahn (13) der Schüttlerhorde (1) vorzugsweise eine Kreisbahn (65) oder eine Ellipsenbahn (60-64) ist.

14. Mähdrescher (2) mit einem Hordenschüttler (66) nach wenigstens einem der vorhergehenden Ansprüche,
**dadurch gekennzeichnet,**
**dass** die Ellipsenbahnen (60-64) unerschiedlich kleine Halbachsen (71, 72, 73) aufweisen.

15. Mähdrescher (2) mit einem Hordenschüttler (66) nach wenigstens einem der vorhergehenden Ansprüche,
**dadurch gekennzeichnet,**
**dass** die Ellipsenbahnen (63-64) unterschiedlich große Ellipsenneigungswinkel (74, 75) zur Schüttlerhorde (1) aufweisen.

16. Mähdrescher (2) mit einem Hordenschüttler (66) nach wenigstens einem der vorhergehenden Ansprüche,
**dadurch gekennzeichnet,**
**dass** je höher die Erntegutfeuchte oder je größer die Erntegutmenge ist, desto kleiner wird die kleine Halbachse (71, 72, 73) der Ellipsenbahn (60-64) gewählt.

17. Mähdrescher (2) mit einem Hordenschüttler (66) nach wenigstens einem der vorhergehenden Ansprüche,
**dadurch gekennzeichnet,**
**dass** je höher die Erntegutfeuchte oder je größer die Erntegutmenge ist, desto größer wird der Ellipsenneigungswinkel (74, 75) der Ellipsenbahn (60-64) gewählt.

18. Mähdrescher (2) mit einem Hordenschüttler (66) nach wenigstens einem der vorhergehenden Ansprüche,
**dadurch gekennzeichnet,**
**dass** die Stellglieder (6, 7, 8) als doppelt wirkende Hydraulikzylinder (3, 4, 5) und/oder als Pneumatikzylinder und/oder als elektrische Verstellantriebe ausgeführt sind.

19. Mähdrescher (2) mit einem Hordenschüttler (66) wobei der Hordenschüftler (66) ein oder mehrere zueinander benachbarte Schüttlerhorden (1) umfasst und jede Schüttlerhorde (1) auf einer Bewegungsbahn (13) bewegbar ist, wobei die Bewegungsbahn (13, 60-65) der Schüttlerhorde (1) kontinuierlich in Abhängigkeit von der Neigung des Mähdreschers (2) änderbar ist,
**dadurch gekennzeichnet,**
**dass** die Schüttlerhorde (1) über wenigstens drei längenveränderliche Stellglieder (6, 7, 8) beweglich mit einem Maschinengehäuse (9) verbunden ist.

## Claims

1. A combine harvester (2) comprising a straw walker (66), wherein the straw walker (66) includes one or more mutually adjacent walker boards (1) and each walker board (1) is movable on a path of movement (13), wherein the path of movement (13, 60-65) of the walker board (1) is changeable continuously in dependence on at least one crop material parameter,
**characterised in that**
the walker board (1) is connected movably to a machine housing (9) by way of at least three variable-length adjusting members (6, 7, 8).

2. A combine harvester (2) comprising a straw walker (66) according to claim 1 **characterised in that** the path of movement (13, 60-65) of the walker board (1) is produced by the change in length (10, 11, 12) of at least one adjusting member (6, 7, 8).

3. A combine harvester (2) comprising a straw walker (66) according to at least one of the preceding claims **characterised in that** at least one first adjusting member (6) is pivotably mounted in the front region of the walker board (1) and at least two further adjusting members (7, 8) are pivotably mounted in the rearward region of the walker board (1), or
a first adjusting member (8) is pivotably mounted in the rearward region of the walker board (1) and at least two further adjusting members (6, 7) are pivotably mounted in the front region of the walker board (1).

4. A combine harvester (2) comprising a straw walker (66) according to at least one of the preceding claims **characterised in that** at least a first and a second adjusting member (3, 4, 6, 7) are arranged in the region of the material entry end (14) of the walker board (1), wherein the first and the second adjusting members (3, 4, 6, 7) are connected to the walker board (1) pivotably about the common pivot point (15) and to the machine housing (9) pivotably about the mutually spaced pivot points (16, 17) and at least one further adjusting member (5, 8) is arranged in the region of the material exit end (18) of the walker board (1), wherein the further adjusting member (5, 8) is connected to the walker board (1) pivotably at a further pivot point (20) and to the machine housing (9) pivotably at a pivot point (21).

5. A combine harvester (2) comprising a straw walker (66) according to at least one of the preceding claims **characterised in that** the path of movement (13, 60-65) of the walker board (1) results from a circulatory movement of the pivot point (15) associated with the walker board (1) at the front end on a first endless curved path (29) and from a circulatory movement of the pivot point (20) associated with the walker board (1) in a rearward region on a second endless curved path (30).

6. A combine harvester (2) comprising a straw walker (66) according to at least one of the preceding claims **characterised in that** the changes in length (10, 11, 12) of at least two adjusting members (6, 7, 8) cause the circulatory movement of at least one pivot point (15, 20) on the endless curved path (29, 30).

7. A combine harvester (2) comprising a straw walker (66) according to at least one of the preceding claims **characterised in that** the first endless curved path (29) of the pivot point (15) associated with the walker board (1) at the front end is afforded by the unequal changes in length (10, 11) of the first and second adjusting members (6, 7).

8. A combine harvester (2) comprising a straw walker (66) according to at least one of the preceding claims **characterised in that** the second endless curved path (30) of the pivot point (20) associated with the walker board (1) in a rearward region results from the circulatory movement of the pivot point (15) associated with the walker board (1) at the front end on the first curved path (29) and the changes in length (12) of the further adjusting member (5, 8).

9. A combine harvester (2) comprising a straw walker (66) according to at least one of the preceding claims **characterised in that** the changes in length (11, 12) of at least one adjusting member (4, 7) pivotably mounted to the pivot point (15) associated with the walker board (1) at the front end and of at least one adjusting member (5, 8) pivotably mounted to the pivot point (20) associated with the walker board (1) in a rearward region are synchronous.

10. A combine harvester (2) comprising a straw walker (66) according to at least one of the preceding claims **characterised in that** a plurality of paths of movement (13, 60-65) for the walker board (1), which are dependent on at least one crop material parameter, are stored in a control unit (56), wherein the control unit (56) predetermines for each path of movement (13, 60-65) of the walker board (1) the associated changes in length (10, 11, 12) for the adjusting members (6, 7, 8).

11. A combine harvester (2) comprising a straw walker (66) according to at least one of the preceding claims **characterised in that** the control unit (56) selects a path of movement (13, 60-65) in dependence on at least one crop material parameter and with the associated changes in length (10, 11, 12) for the adjusting members (3, 4, 5, 6, 7, 8) regulates the direction of movement and the extension and retraction speeds of the adjusting members (6, 7, 8).

12. A combine harvester (2) comprising a straw walker (66) according to at least one of the preceding claims **characterised in that** the crop material parameter or parameters are the crop material moisture content and/or the amount of the crop material and/or the grain loss.

13. A combine harvester (2) comprising a straw walker (66) according to at least one of the preceding claims **characterised in that** the path of movement (13) of the walker board (1), that is stored in the control unit (56), is preferably a circular path (65) or an elliptical path (60-64).

14. A combine harvester (2) comprising a straw walker (66) according to at least one of the preceding claims **characterised in that** the elliptical paths (60-64) have different semiminor axes (71, 72, 73).

15. A combine harvester (2) comprising a straw walker (66) according to at least one of the preceding claims **characterised in that** the elliptical paths (63-64) have different ellipsis inclination angles (74, 75) relative to the walker board (1).

16. A combine harvester (2) comprising a straw walker (66) according to at least one of the preceding claims **characterised in that** the higher the crop material moisture content or the greater the amount of crop material the correspondingly smaller is the semiminor axis (71, 72, 73) selected for the elliptical path (60-64).

17. A combine harvester (2) comprising a straw walker (66) according to at least one of the preceding claims **characterised in that** the higher the crop material moisture content or the greater the amount of crop material the correspondingly greater is the ellipsis inclination angle (74, 75) selected for the elliptical path (60-64).

18. A combine harvester (2) comprising a straw walker (66) according to at least one of the preceding claims **characterised in that** the adjusting members (6, 7, 8) are in the form of double-acting hydraulic cylinders (3, 4, 5) and/or in the form of pneumatic cylinders and/or in the form of electric adjusting drives.

19. A combine harvester (2) comprising a straw walker (66), wherein the straw walker (66) includes one or more mutually adjacent walker boards (1) and each walker board (1) is movable on a path of movement (13), wherein the path of movement (13, 60-65) of the walker board (1) is changeable continuously in dependence on the inclination of the combine harvester (2),
**characterised in that**
the walker board (1) is connected movably to a machine housing (9) by way of at least three variable-length adjusting members (6, 7, 8).

## Revendications

1. Moissonneuse-batteuse (2) dotée d'un vibreur (66) à claies, le vibreur (66) à claies comprenant une ou plusieurs claies vibrantes (1) voisines l'une de l'autre, chaque claie vibrante (1) pouvant être déplacée sur une trajectoire de déplacement (13), la trajectoire de déplacement (13, 60-65) des claies vibrantes (1) pouvant être modifiée de manière progressive en fonction d'au moins un paramètre de récolte,
**caractérisée en ce que**
la claie vibrante (1) est reliée à déplacement à un caisson de machine (9) par au moins trois organes de réglage (6, 7, 8) de longueur modifiable.

2. Moissonneuse-batteuse (2) dotée d'un vibreur à claies (66) selon la revendication 1, **caractérisée en ce que** la trajectoire de déplacement (13, 60-65) de la claie vibrante (1) est formé par la modification (10, 11, 12) de la longueur d'au moins un organe de réglage (6, 7, 8).

3. Moissonneuse-batteuse (2) dotée d'un vibreur à claies (66) selon au moins l'une des revendications précédentes, **caractérisée en ce qu'**au moins un premier organe de réglage (6) est articulé dans la partie avant de la claie vibrante (1) et au moins deux autres organes de réglage (7, 8) sont articulés dans la partie arrière de la claie vibrante (1) ou **en ce qu'**un premier organe de réglage (8) est articulé dans la partie arrière de la claie vibrante (1) et au moins deux autres organes de réglage (6, 7) sont articulés dans la partie avant de la claie vibrante (1).

4. Moissonneuse-batteuse (2) dotée d'un vibreur à claies (66) selon au moins l'une des revendications précédentes, **caractérisée en ce qu'**au moins un premier et un deuxième organe de réglage (3, 4, 6, 7) sont disposés dans la partie de l'extrémité (14) d'entrée de produit de la claie vibrante (1), **en ce que** le premier et le deuxième organe de réglage (3, 4, 6, 7) sont reliés à la claie vibrante (1) de manière à pouvoir pivoter autour du point d'articulation (15) commun et au caisson de machine (9) de manière à pouvoir pivoter autour des points d'articulation (16, 17) situés à distance l'un de l'autre, **en ce qu'**au moins un autre organe de réglage (5, 8) est disposé dans la zone de l'extrémité (18) de sortie de produit de la claie vibrante (1) et **en ce que** l'autre organe de réglage (5, 8) est relié à la claie vibrante (1) de manière à pouvoir pivoter autour d'un autre point d'articulation (20) et au caisson de machine (9) de manière à pouvoir pivoter autour d'un point d'articulation (21).

5. Moissonneuse-batteuse (2) dotée d'un vibreur à claies (66) selon au moins l'une des revendications précédentes, **caractérisée en ce que** la trajectoire de déplacement (13, 60-65) de la claie vibrante (1) résulte de la circulation du point d'articulation (15) associé à l'avant de la claie vibrante (1) sur une première piste incurvée sans fin (29) et de la circulation du point d'articulation (20) associé à la partie arrière de la claie vibrante (1) sur une deuxième piste incurvée sans fin (30).

6. Moissonneuse-batteuse (2) dotée d'un vibreur à claies (66) selon au moins l'une des revendications précédentes, **caractérisée en ce que** les modifications (10, 11, 12) de la longueur d'au moins deux organes de réglage (6, 7, 8) ont pour effet la circulation d'au moins un point d'articulation (15, 20) sur la piste incurvée sans fin (29, 30).

7. Moissonneuse-batteuse (2) dotée d'un vibreur à claies (66) selon au moins l'une des revendications précédentes, **caractérisée en ce que** la première piste incurvée sans fin (29) du point d'articulation (15) associé à l'avant de la claie vibrante (1) résulte de variations inégales (10, 11) de la longueur du premier et du deuxième organe de réglage (6, 7).

8. Moissonneuse-batteuse (2) dotée d'un vibreur à claies (66) selon au moins l'une des revendications précédentes, **caractérisée en ce que** la deuxième piste incurvée sans fin (30) du point d'articulation (20) associée à la partie arrière de la claie vibrante (1) résulte de la circulation du point d'articulation (15) associé à l'avant de la claie vibrante (1) sur la première piste incurvée (29) et des variations (12) de la longueur de l'autre organe de réglage (5, 8).

9. Moissonneuse-batteuse (2) dotée d'un vibreur à claies (66) selon au moins l'une des revendications précédentes, **caractérisée en ce que** les variations (11, 12) de la longueur d'au moins un des organes de réglage (4, 7) articulés sur le point d'articulation (15) associé à l'avant de la claie vibrante (1) et d'au moins un organe de réglage (5, 8) articulé sur le point d'articulation (20) associé à la partie arrière de la claie vibrante (1) sont synchronisées.

10. Moissonneuse-batteuse (2) dotée d'un vibreur à claies (66) selon au moins l'une des revendications précédentes, **caractérisée en ce qu'**une unité de commande (56) conserve en mémoire plusieurs trajectoires de déplacement (13, 60-65) de la claie vibrante (1) qui dépendent d'au moins un paramètre de récolte et **en ce que** les modifications (10, 11, 12) associées de la longueur des organes de réglage (6, 7, 8) sont prédéterminées par l'unité de commande (56) pour chaque trajectoire de déplacement (13, 60-65) de la claie vibrante (1).

11. Moissonneuse-batteuse (2) dotée d'un vibreur à claies (66) selon au moins l'une des revendications précédentes, **caractérisée en ce que** l'unité de commande (56) sélectionne une trajectoire de déplacement (13, 60-65) en fonction d'au moins un paramètre de récolte et régule par les modifications associées (10, 11, 12) de la longueur des organes de commande (3, 4, 5, 6, 7, 8) la direction de déplacement et la vitesse de rétraction et d'extension des organes de réglage (6, 7, 8).

12. Moissonneuse-batteuse (2) dotée d'un vibreur à claies (66) selon au moins l'une des revendications précédentes, **caractérisée en ce que** le ou les paramètres de récolte sont l'humidité de la récolte, le débit de récolte et/ou la perte en grains.

13. Moissonneuse-batteuse (2) dotée d'un vibreur à claies (66) selon au moins l'une des revendications précédentes, **caractérisée en ce que** la trajectoire de déplacement (13) de la claie vibrante (1) conservée en mémoire dans l'unité de commande (56) est de préférence une trajectoire circulaire (65) ou une trajectoire elliptique (60-64).

14. Moissonneuse-batteuse (2) dotée d'un vibreur à claies (66) selon au moins l'une des revendications précédentes, **caractérisée en ce que** les trajectoires elliptiques (60-64) ont des petits demi-axes (71, 72, 73) différents.

15. Moissonneuse-batteuse (2) dotée d'un vibreur à claies (66) selon au moins l'une des revendications précédentes, **caractérisée en ce que** les trajectoires elliptiques (63-64) forment par rapport à la claie vibrante (1) des angles d'inclinaison d'ellipse (74, 75) différents.

16. Moissonneuse-batteuse (2) dotée d'un vibreur à claies (66) selon au moins l'une des revendications précédentes, **caractérisée en ce que** le petit demi-axe (71, 72, 73) des trajectoires elliptiques (60-64) est d'autant plus petit que l'humidité de la récolte est plus élevée ou que le débit de récolte est plus élevé.

17. Moissonneuse-batteuse (2) dotée d'un vibreur à claies (66) selon au moins l'une des revendications précédentes, **caractérisée en ce que** l'angle d'inclinaison de l'ellipse (74, 75) des trajectoires elliptiques (60-64) est d'autant plus grand que l'humidité de la récolte est plus grande ou que le débit de récolte est plus grand.

18. Moissonneuse-batteuse (2) dotée d'un vibreur à claies (66) selon au moins l'une des revendications précédentes, **caractérisée en ce que** les organes de réglage (6, 7, 8) sont configurés comme vérins hydrauliques (3, 4, 5) à double effet et/ou comme vérins pneumatiques et/ou comme entraînements électriques de réglage.

19. Moissonneuse-batteuse (2) dotée d'un vibreur (66) à claies, le vibreur (66) à claies comprenant une ou plusieurs claies vibrantes (1) voisines l'une de l'autre, chaque claie vibrante (1) pouvant être déplacée sur une trajectoire de déplacement (13), la trajectoire de déplacement (13, 60-65) des claies vibrantes (1) pouvant être modifiée de manière progressive en fonction de l'inclinaison de la moissonneuse-batteuse (2),
**caractérisée en ce que**
la claie vibrante (1) est reliée à déplacement à un caisson de machine (9) par au moins trois organes de réglage (6, 7, 8) de longueur modifiable.
